(19) Europäisches Patentamt
European Patent Office
Office européen des brevets

(11) EP 3 525 999 B1

(12) EUROPEAN PATENT SPECIFICATION

(45) Date of publication and mention of the grant of the patent:
**02.12.2020 Bulletin 2020/49**

(21) Application number: **17798023.2**

(22) Date of filing: **11.10.2017**

(51) Int Cl.:
***B29B 9/06*** *(2006.01)* ***C08F 255/02*** *(2006.01)*

(86) International application number:
**PCT/US2017/056090**

(87) International publication number:
**WO 2018/071507 (19.04.2018 Gazette 2018/16)**

# (54) METHOD TO PRODUCE FUNCTIONALIZED ETHYLENE-BASED POLYMERS

VERFAHREN ZUR HERSTELLUNG VON FUNKTIONALISIERTEN POLYMEREN AUF ETHYLENBASIS

MÉTHODE DE PRODUCTION DE POLYMÈRES A BASE D’ÉTHYLÈNE FONCTIONNALISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2016 US 201662406981 P**

(43) Date of publication of application:
**21.08.2019 Bulletin 2019/34**

(73) Proprietor: **Dow Global Technologies LLC**
**Midland, MI 48674 (US)**

(72) Inventors:
- **BAWISKAR, Santosh S.**
**Lake Jackson**
**TX 77566 (US)**
- **JOHNSON, Gregory E.**
**Lake Jackson**
**TX 77566 (US)**

(74) Representative: **Boult Wade Tennant LLP**
**Salisbury Square House**
**8 Salisbury Square**
**London EC4Y 8AP (GB)**

(56) References cited:
**WO-A1-01/47677** **WO-A1-2017/116843**
**WO-A2-2015/102886** **CA-C- 1 339 160**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

REFERENCE TO RELATED APPLICATIONS

This application claims the benefit of U.S. Provisional Application 62/406981, filed on October 12, 2016.

In this specification, the following non-SI units are used, which may be converted to the respective SI unit according to the following conversion table:

| *Name of Unit* | *Symbol* | *Conversion factor* | *SI unit* |
|---|---|---|---|
| *Fahrenheit* | °F | (°F-32)*5/9 | °C |
| *Centipoise* | Cp | 1 | mPa.s |
| *Pound* | lbs | 0.4536 | kg |

BACKGROUND

It is difficult to attain high production rates, when functionalizing (for example, grafting) low molecular weight (low viscosity) olefin-based polymers with maleic anhydride or silane, using reactive extrusion. This is primarily due to slow reaction rates, as a result of slow peroxide (initiator) decomposition rates, at the low melt temperatures during the extrusion process. Low melt temperatures are attributed to the low viscosity and the insufficient viscous heat generation needed to raise melt temperature of the polymer melt. Longer L/D (length/diameter) extruder, high intensity screw designs, and lower half-life peroxides help mitigate this issue of low production rates, to some extent, but still do not permit the desired production rates.

A further limitation on the production rate is the pelletization process. A significant portion of the extruder is used to cool the melt, to the gain the melt strength needed to be able to underwater pelletize the final extrudate. In other words, the melt needs to be first heated to initiate, and complete, the functionalization reaction, and then the melt needs be cooled to enable underwater pelletization. This thermal profile, which requires extended cooling within the extruder, results in lower production rates, and to improve the production rate, longer L/D extruders, or additional cooling devices, such as melt coolers, are needed. If the functionalization reaction is carried out at higher run rates and/or using excess peroxide, a significant amount of peroxide remains undecomposed, which is undesirable. This residual peroxide in the final polymer product can lead to viscosity increases, via unwanted side reactions (for example, cross-linking), during the end-use of the polymer product, or during the viscosity measurement of the polymer product.

Functionalization reactions and/or pelletization methods are described in the following references: U.S. 20100160497, U.S. 2004/0164443, U.S. 6706396, WO 2006/039774, WO 2015/102886, WO 2001/047677; WO2010/059332, International Appl. PCT/US16/53017 (filed September 22, 2016), and U.S. Provisional appl. 62/272390 (filed December 29, 2015). However, there remains a need, for new functionalization processes to improve efficiency (high production rates) in the functionalization of low viscosity ethylene-based polymers, using a continuous reactive extrusion process. There is a further need for such processes that result in low residual peroxide content, avoid the need for significant melt cooling within the extruder, and provide the final product in a pelletized form. These needs are met by the following process.

SUMMARY OF THE INVENTION

A process to form a "functionalized ethylene-based polymer" from a first composition comprising an ethylene-based polymer and at least one polar compound, and at least one peroxide, said process comprising at least the following:

a) thermally treating the first composition, in at least one extruder comprising at least one barrel, to form the functionalized ethylene-based polymer;
b) extruding the functionalized ethylene-based polymer, in melt form, to form an extrudate;
c) cooling the extrudate; and
d) pelletizing the extrudate; and

wherein the "efficiency of the peroxide consumption, after the thermal treatment, is ≥ 91 wt% within the at least one extruder; and

wherein the feed rate of the extruder is ≥ 635.0 kg/hr (1400 lbs/hr) and the "normalized feed rate" of the extruder is ≥ 0.00082 (kg/hr)/mm)$^3$ ( 0.0018 (lbs/hr)/(mm)$^3$) ; and

wherein, for step c), after the extrudate exits the extruder, and before the extrudate is pelletized, the extrudate is cooled in a cooling medium to a pelletization temperature, $T_{pel}$ (in °C), ≤ the crystallization temperature $T_c$ (in °C) of the functionalized ethylene-based polymer.

## DETAILED DESCRIPTION

A functionalization process has been discovered that allows more effective reactive extrusion of lower viscosity ethylene-based polymers. Unexpectedly, the finished product also exhibited a significantly low yellowness index (YI). A water slide strand pelletizer is suitably used in this process. Unlike underwater pelletization, where the molten polymer is "hot cut" at the die face, above the crystallization temperature of the functionalized polymer, the water slide strand pelletizer uses a die to form strands, which are cooled below the crystallization temperature of the functionalized polymer, and subsequently "cold cut." Thus, it has been discovered that a larger portion of the extruder can be used for completing the functionalization reaction, and there is no need to significantly cool the melt within the extruder, as with underwater pelletization. Consequently, it has been discovered that the functionalized polymer can be produced at higher run rates and/or in a shorter L/D extruder.

Thus, a process has been discovered to efficiently (high productivity rates) produce low viscosity, functionalized ethylene-based polymers, using a continuous reactive extrusion process, followed by pelletization using a water slide strand cutter. It has been discovered that such processes can achieve feed rates ≥1400 lbs/hr, typically not possible with the incumbent process using underwater pelletization. Such processes can allow more of the available extruder volume to operate at an extruder reaction zone temperature greater than 200°C, which is limited for the incumbent underwater pelletization process. It has also been surprisingly discovered that the ethylene-based polymer with a density of 0.87 g/cc can be effectively processed. Such "soft" elastomers cannot normally be easily cut, using "cold cut" methods, such as water slide strand cutting. Additionally, it was discovered that the functionalized polymer could be produced with consistently low Yellowness Index (YI), using feed rates ≥1400 lbs/hr. Functionalized polymer may be made using a batch process, for example, in a kettle, but this batch process is very inefficient and expensive, compared to a continuous process using an extruder (for example, a twin screw extruder). It has been discovered that the process, described herein, provides a continuous process for the improved functionalization and the subsequent pelletization of functionalized ethylene-based polymers, formed from low viscosity ethylene-based polymers.

As discussed above, a process is provided to form a "functionalized ethylene-based polymer" from a first composition comprising an ethylene-based polymer and at least one polar compound, and at least one peroxide, said process comprising at least the following:

a) thermally treating the first composition, in at least one extruder comprising at least one barrel, to form the functionalized ethylene-based polymer; b) extruding the functionalized ethylene-based polymer, in melt form, to form an extrudate; c) cooling the extrudate; and d) pelletizing the extrudate; and

wherein the "efficiency of the peroxide consumption, after the thermal treatment, is ≥ 91 wt% within the at least one extruder; and

wherein the "normalized feed rate" of the extruder is ≥ 0.0018 (lbs/hr)/(mm)$^3$; and wherein, for step c), after the extrudate exits the extruder, and before the extrudate is pelletized, the extrudate is cooled in a cooling medium to a pelletization temperature, $T_{pel}$ (in °C), ≤ the crystallization temperature $T_c$ (in °C) of the functionalized ethylene-based polymer. The crystallization temperature $T_c$ (in °C) can be determined by DSC.

An inventive process may comprise a combination of two or more embodiments as described herein.

In one embodiment, the at least one peroxide that has a half-life (at 200°C) ≤ (total reaction time/3.5), or a half-life (at 200°C) ≤ (total reaction time/4.0).

In one embodiment, the "normalized feed rate" of the extruder is ≥ 0.0019, or ≥ 0.0020, or ≥ 0.0021, or ≥ 0.0022 (lbs/hr)/(mm)$^3$.

In one embodiment, the pelletization rate is ≥ 1400, or ≥ 1450, or ≥ 1500, or ≥ 1550, or ≥ 1600, or ≥ 1650, or ≥ 1700, or ≥ 1750, or ≥ 1800 lbs pellets per hour.

In one embodiment, the at least one peroxide that has a half-life (at 200°C) ≤ 15, or ≤ 14, or ≤ 13, or ≤ 12 seconds.

In one embodiment, the at least one peroxide decomposes into at least one primary radical selected from the following radicals: a) RCOO•, wherein R is an alkyl; b) RO•, wherein R is an alkyl; or c) ROC(O)O•, wherein R is an alkyl.

In one embodiment, at least one peroxide decomposes into one or more primary radicals (Z•), and wherein the energy of each radical is greater than, or equal to, 100 kcal/mole. The larger energy differential between the radical and the hydrogen on the polymer to be abstracted is preferred. See P. R. Dluzneski, "Peroxide Vulcanization of Elastomers", Rubber Chemistry and Technology, Volume 74, page 452.

In one embodiment, the peroxide has a self-accelerating decomposition temperature (SADT) ≤ 100°C, further ≤ 90°C, further ≤ 70°C. The SADT refers to that of a pure peroxide (pure > 90% wt% peroxide). In one embodiment, the

pure peroxide has an SADT ≥ 50°C, further ≥ 55°C, further ≥ 60°C.

In one embodiment, the pure peroxide has a half-life from 0.02 to 2.00 minutes, further from 0.10 to 1.00 minutes, further from 0.10 to 0.50 minutes, at a temperature from 170°C to 220°C, further from 190°C to 210°C.

Suitable peroxides include, but are not limited to, the following: LUPEROX 101 (2,5-dimethyl-2,5-di(t-butylperoxy)hexane) CAS # 78-63-7; LUPEROX DC (dicumyl peroxide), CAS #80-43-3; LUPEROX DTA (di(t-amyl) peroxide) CAS# 10508-09-5; LUPEROX P (t-butyl peroxybenzoate) CAS# 614-45-9; LUPEROX TAP (t-amyl peroxybenzoate) CAS# 4511-39-1; LUPEROX F (a,a'-bis(t-butylperoxy)-diisopropylbenzene) CAS# 25155-25-3; and LUPEROX TBEC (OO-t-butyl O-(2-ethylhexyl) monoperoxycarbonate) CAS# 34443-12-4. LUPEROX 101 is the preferred peroxide.

In one embodiment, the first composition comprises ≤ 2000 ppm of peroxide, based on weight of the first composition.

A peroxide may comprise a combination of two or more embodiments as described herein.

In one embodiment, the cooling medium temperature is from 4°C to 20°C (40°F to 70°F), or from 6°C to 18°C, or from 8°C to 16°C.

In one embodiment, the pelletization temperature $T_{pel}$ is ≤ the crystallization temperature of the ethylene based polymer, as determined by DSC.

In one embodiment, the cooling medium is a water-based medium. In a further embodiment, the cooling medium is a water-based medium that contains pelletizing aids, such as one or more surfactants and one or more foam control agents.

In one embodiment, for step c), the extrudate is cooled using a water slide, which contains the cooling medium. In a further embodiment, the water slide is a wet cut water slide strand pelletizer. In another embodiment, the water slide is a dry cut water slide strand pelletizer.

In one embodiment, in step b), the temperature of the polymer melt as it exits the extruder is from 160°C to 200°C, or from 160°C to 190°C.

In one embodiment, in step b), the temperature of the polymer melt at the die of the last extruder is from 160°C to 200°C, or from 160°C to 190°C.

In one embodiment, for steps c) and d), the extrudate is cooled, and then pelletized, using a wet cut water slide strand pelletizer or dry cut water slide strand pelletizer.

In one embodiment, the extruder comprises at least two barrel sections.

In one embodiment, the extruder comprises at least two barrel sections in a modular extruder.

In one embodiment, the extruder has ≥ 2, or ≥ 4, or ≥ 6, or ≥ 8, or ≥ 10 barrels.

In one embodiment, the at least one polar compound is an anhydride-containing compound (for example, maleic anhydride) and/or carboxylic acid-containing compound (for example, maleic acid). In one embodiment, the at least one polar compound is an anhydride-containing compounding, and further maleic anhydride.

In one embodiment, the ethylene-based polymer has a melt viscosity at 350°F (177°C) ≤ 50,000 cP, or ≤ 45,000 cP, or ≤ 40,000 cP. In one embodiment, the ethylene-based polymer has a melt viscosity at 350°F (177°C) ≤ 30,000 cP, or ≤ 25,000 cP, or ≤ 20,000 cP, or ≤ 15,000 cP. In one embodiment, the ethylene-based polymer has a melt viscosity at 350°F (177°C) ≥ 1,000 cP, or ≥ 2,000 cP, or ≥ 3,000 cP, or ≥ 4,000 cP, or ≥ 5,000 cP.

In one embodiment, the ethylene-based polymer has a density ≤ 0.900, or ≤ 0.895, or ≤ 0.890, or ≤ 0.885, or ≤ 0.880, or ≤ 0.875 g/cc (g/cc = $g/cm^3$). In one embodiment, the ethylene-based polymer has a density ≥ 0.850, or ≥ 0.855, or ≥ 0.860, or ≥ 0.865 g/cc (g/cc = $g/cm^3$).

In one embodiment, the ethylene-based polymer has a molecular weight distribution (MWD) from 1.90 to 2.50, or from 2.00 to 2.40.

In one embodiment, the ethylene-base polymer is an ethylene/a-olefin interpolymer, and wherein the $\alpha$-olefin is a $C_3$-$C_{20}$ $\alpha$-olefin, further a $C_3$-$C_{10}$ $\alpha$-olefin. In one embodiment, the ethylene-base polymer is an ethylene/a-olefin copolymer, and wherein the $\alpha$-olefin is a $C_3$-$C_{20}$ $\alpha$-olefin, further a $C_3$-$C_{10}$ $\alpha$-olefin.

In one embodiment, the functionalized ethylene-based polymer has a melt viscosity ≤ 20,000 cP, or ≤ 15,000 cP. In one embodiment, the functionalized ethylene-based polymer has a melt viscosity, at 350°F (177°C), from 1000 cP to 20000 cP, or from 2000 cP to 18000 cP, or 3000 cP to 16000 cP. In one embodiment, the functionalized ethylene-based polymer has a melt viscosity, at 350°F (177°C), from 5000 cP to 20000 cP, or from 6000 cP to 18000 cP, or from 7000 cP to 16000 cP.

In one embodiment, the functionalized ethylene-based polymer has a density ≤ 0.900, or ≤ 0.895, or ≤ 0.890, or ≤ 0.885, or ≤ 0.880, or ≤ 0.875 g/cc (g/cc = $g/cm^3$). In one embodiment, the functionalized ethylene-based polymer has a density ≥ 0.850, or ≥ 0.855, or ≥ 0.860, or ≥ 0.865 g/cc (g/cc = $g/cm^3$).

In one embodiment, the functionalized ethylene-based polymer has a MWD from 1.90 to 2.50, or from 2.00 to 2.40.

In one embodiment, the functionalized ethylene-based polymer is an anhydride grafted ethylene-based polymer that has an anhydride graft level ≥ 0.8 wt%, or ≥ 1.0 wt%, based on the weight of the anhydride grafted ethylene-based polymer. In a further embodiment, the functionalized ethylene-based polymer has a YI value ≤ 15.0, or ≤ 14.0, or ≤ 13.0,

or ≤ 12.0, or ≤ 11.0, or ≤ 10.0. In one embodiment, the functionalized ethylene-based polymer is a maleic anhydride grafted ethylene-based polymer that has a maleic anhydride graft level ≥ 0.8 wt%, or > 1.0 wt%, based on the weight of the maleic anhydride grafted ethylene-based polymer. In a further embodiment, the functionalized ethylene-based polymer has a YI value ≤ 15.0, or ≤ 14.0, or ≤ 13.0, or ≤ 12.0, or ≤ 11.0, or ≤ 10.0.

In one embodiment, the functionalized ethylene-based polymer has a functionalization level from 0.5 to 2.0 wt%, or from 0.8 to 2.0 wt%, based on the weight of the functionalized ethylene based polymer.

In one embodiment, the functionalized ethylene-based polymer has a YI value ≤ 15.0, or ≤ 14.0, or ≤ 13.0, or ≤ 12.0, or ≤ 11.0, or ≤ 10.0.

In one embodiment, the functionalized ethylene-base polymer is a functionalized ethylene/a-olefin interpolymer. In one embodiment, the α-olefin is a $C_3$-$C_{20}$ α-olefin, further a $C_3$-$C_{10}$ α-olefin. In one embodiment, the functionalized ethylene-base polymer is a functionalized ethylene/a-olefin copolymer. In one embodiment, the α-olefin is a $C_3$-$C_{20}$ α-olefin, further a $C_3$-$C_{10}$ α-olefin.

Also is provided a functionalized ethylene-based polymer formed from a process as described herein.

In one embodiment, the functionalized ethylene-based polymer has a functionalization level from 0.5 to 2.0 wt%, or from 0.8 to 2.0 wt%, based on the weight of the functionalized ethylene based polymer.

In one embodiment, the functionalized ethylene-based polymer has a YI value ≤ 15.0, or ≤ 14.0, or ≤ 13.0, or ≤ 12.0, or ≤ 11.0, or ≤ 10.0.

In one embodiment, the functionalized ethylene-based polymer has a melt viscosity ≤ 20,000 cP, or ≤ 15,000 cP. In one embodiment, the functionalized ethylene-based polymer has a melt viscosity, at 350°F (177°C), from 1000 cP to 20000 cP, or from 2000 cP to 18000 cP, or 3000 cP to 16000 cP. In one embodiment, the functionalized ethylene-based polymer has a melt viscosity, at 350°F (177°C), from 5000 cP to 20000 cP, or from 6000 cP to 18000 cP, or from 7000 cP to 16000 cP.

In one embodiment, the functionalized ethylene-based polymer has a density ≤ 0.900, or ≤ 0.895, or ≤ 0.890, or ≤ 0.885, or ≤ 0.880, or ≤ 0.875 g/cc (g/cc = g/$cm^3$). In one embodiment, the functionalized ethylene-based polymer has a density ≥ 0.850, or ≥ 0.855, or ≥ 0.860, or ≥ 0.865 g/cc (g/cc = g/$cm^3$).

In one embodiment, the functionalized ethylene-based polymer has a MWD from 1.90 to 2.50, or from 2.00 to 2.40.

Also is provided a composition comprising the functionalized ethylene-based polymer, as described herein. Also is provided an article comprising at least one component formed from the composition. In one embodiment, the article is selected from a film, a fiber, a foam, a molded part, a coating, an adhesive, or a dispersion. In one embodiment, the article is selected from an automotive part, an adhesive, a computer part, a roofing material, a construction material, a carpet component, or a footwear component.

**Polar Compound**

The term "polar compound," as used herein, refers to an organic compound comprising at least one heteroatom (for example, O, N, Si, S, P). Examples of polar compounds include, but are not limited to, ethylenically unsaturated carboxylic acids, such as maleic acid, fumaric acid, itaconic acid, acrylic acid, methacrylic acid, and crotonic acid; acid anhydrides such as maleic anhydride and itaconic anhydride; vinyl benzyl halides such as vinyl benzyl chloride and vinyl benzyl bromide; alkyl acrylates and methacrylates, such as methyl acrylate, ethyl acrylate, butyl acrylate, lauryl acrylate, methyl methacrylate, ethyl methacrylate, butyl methacrylate, and lauryl methacrylate; and ethylenically unsaturated oxiranes, such as glycidyl acrylate, glycidyl methacrylate, and glycidyl ethacrylate. Preferred compounds include maleic anhydride, acrylic acid, methacrylic acid, glycidyl acrylate, glycidyl methacrylate, with maleic anhydride being more preferred. See also, U.S. Patent 7,897,689 (column 51 through column 54).

In one embodiment, the polar compound is a carbonyl-containing compound, which is selected from the group consisting of maleic anhydride, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof.

In one embodiment, the polar compound is an anhydride-containing and/or carboxylic acid-containing compound. In a further embodiment, the polar compound is an anhydride-containing compound. In a further embodiment, the polar compound is maleic anhydride.

In one embodiment, the polar compound is a silane, and further a vinyltrialkoxysilane, for example, vinyltrimethoxysilane or vinyltriethoxysilane.

In one embodiment, the polar compound has a molecular weight from 50 to 500 g/mole, further from 80 to 400 g/mole, further from 100 to 300 g/mole.

A polar compound may comprise a combination of two or more embodiments described herein.

## Extrusion

Examples of an extruder include, but are not limited to, co-rotating intermeshing twin screw extruders, counter-rotating twin screw extruders, tangential twin screw extruders, Buss kneader extruders, planetary extruders and single screw extruders. Specific examples include co-rotating intermeshing twin screw extruders. Further, features of interest are design specifications, such as length / diameter (L/D ratio), mixing sections (screw design). Typically, with a single extruder, the maximum L/D ratio possible is about 60. For longer L/D ratios, two extruders are coupled. Screw designs include, but are not limited to, those comprising of mixing elements, like kneading disc blocks, left handed screw elements, turbine mixing elements, gear mixing elements, and combinations made thereof.

In one embodiment, the L/D ratio of the extruder is from 36 to 90 L/D, or from 46 to 82 L/D. In one embodiment, the temperature of the polymer melt in the reaction zone of the extruder is from 170°C to 220°C, or from 180°C to 210°C.

In one embodiment, the functionalized ethylene-based polymer comprises from 0.5 to 3.0 wt%, or from 0.6 to 2.8 wt%, or from 0.7 to 2.6 wt%, or from 0.8 to 2.4 wt%, further from 1.0 to 2.2 wt% grafted polar compound, based on the weight of the functionalized ethylene-based polymer. In a further embodiment, the functionalized ethylene-based polymer is a maleic anhydride grafted ethylene-based polymer.

Modern extruders, both modular and single barrel, have capability of temperature control across various sections. It is therefore possible to set, and control, different barrel temperatures along the length of the barrel. The maximum barrel temperature is the highest set temperature. Different barrel temperatures are desirable to control the melt temperature along the length of the extruder and the extrudate temperature.

Extruder barrels house the screws or rotors of the extruder. They serve to contain the polymer in the extruder, and are designed to provide heating or cooling to the polymer being processed through heaters and cooling channels. They are designed to withstand high temperatures and pressures encountered during the extrusion operation.

## Functionalized Ethylene-based Polymer

The term "functionalized ethylene-based polymer," as used herein, refers to an ethylene-based polymer that comprises at least one chemical group (chemical substituent), linked by a covalent bond, and which group comprises at least one hetero-atom. A heteroatom is defined as an atom which is not carbon or hydrogen. Common heteroatoms include, but are not limited to, oxygen, nitrogen, silicon, sulfur, phosphorus.

Some examples of compounds that can be grafted onto the ethylene-based polymer include ethylenically unsaturated carboxylic acids and acid derivatives, such as esters, anhydrides, and acid salts. Examples include acrylic acid, methacrylic acid, maleic acid, fumaric acid, itaconic acid, citraconic acid, maleic anhydride, tetrahydrophthalic anhydride, norborn-5-ene-2,3-dicarboxylic acid anhydride, nadic anhydride, himic anhydride, and mixtures thereof. Maleic anhydride is a preferred compound.

In one embodiment, the functionalized ethylene-based polymer comprises at least one functional group selected from the following:

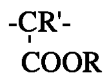 ,

anhydride, and combinations thereof; and wherein R is hydrogen or alkyl, R' is hydrogen or alkyl. In a further embodiment, each alkyl group is, independently, methyl, ethyl, propyl or butyl. In one embodiment, the functionalized ethylene-based polymer is selected from a functionalized ethylene homopolymer or a functionalized ethylene/alphaolefin interpolymer. In a further embodiment, the functionalized ethylene-based polymer is a functionalized ethylene homopolymer. In another embodiment, the functionalized ethylene-based polymer is a functionalized ethylene/alpha-olefin interpolymer, or a functionalized ethylene/alpha-olefin copolymer. Preferred alpha-olefins include C3-C8 alpha-olefins, and further propylene, 1-butene, 1-hexene and 1-octene.

In one embodiment, the functionalized ethylene-based polymer comprises anhydride; and further maleic anhydride. In one embodiment, the functionalized ethylene-based polymer is selected from an anhydride functionalized ethylene homopolymer or an anhydride functionalized ethylene/alpha-olefin interpolymer. In a further embodiment, the functionalized ethylene-based polymer is an anhydride functionalized ethylene homopolymer. In another embodiment, the functionalized ethylene-based polymer is an anhydride functionalized ethylene/alpha-olefin interpolymer, or an anhydride functionalized ethylene/alpha-olefin copolymer. Preferred alpha-olefins include C3-C8 alpha-olefins, and further propylene, 1-butene, 1-hexene and 1-octene.

In one embodiment, the functionalized ethylene-based polymer is a maleic anhydride-grafted polymer. In one embodiment, the functionalized ethylene-based polymer is selected from a maleic anhydride-grafted ethylene homopolymer or a maleic anhydride-grafted ethylene/alpha-olefin interpolymer. In one embodiment, the functionalized ethylene-based polymer is a maleic anhydride-grafted ethylene homopolymer. In another embodiment, the functionalized ethylene-based polymer is a maleic anhydride-grafted ethylene/alpha-olefin interpolymer, or a maleic anhydride-grafted ethylene/alpha-olefin copolymer. Preferred alpha-olefins include C3-C8 alpha-olefins, and further propylene, 1-butene, 1-hexene and 1-octene.

In one embodiment, the functionalized ethylene-based polymer has a melt viscosity ≤ 40,000 cP, ≤ 30,000 cP, or ≤ 20,000 cP, or ≤ 18,000 cP, or ≤ 16,000 cP, at 350°F (177°C). In one embodiment, the functionalized ethylene-based polymer is an anhydride and/or carboxylic acid functionalized ethylene-based polymer. In one embodiment, the functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a melt viscosity ≥ 1,000 cP, or ≥ 2,000 cP, or ≥ 3,000 cP, or ≥ 4,000 cP, or ≥ 5,000 cP, or ≥ 6,000 cP, or ≥ 7,000 cP, or ≥ 8,000 cP at 350°F (177°C). In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a YI value ≤ 15.0, or ≤ 14.5, or ≤ 14.0, or ≤ 13.5, or ≤ 13.0, or ≤ 12.5, or ≤ 12.0, or ≤ 11.5, or ≤ 11.0, or ≤ 10.5, or ≤ 10.0. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a YI value ≥ 0 to 15.0, or ≥ 0 to 12.0, or ≥ 0 to 10.0. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a wt% of functionalization, based on weight of the functionalized polymer, ≥ 0.80 wt%, or ≥ 0.90 wt%, or ≥ 1.00 wt%, or ≥ 1.10 wt%, or ≥ 1.20 wt%. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a has a wt% functionalization, based on weight of the functionalized polymer, from 0.50 to 2.00 wt%, or from 0.60 to 1.80 wt%, or from 0.70 to 1.60 wt%, or from 0.80 to 1.50 wt%, or from 0.90 to 1.40 wt%. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a molecular weight distribution (Mw/Mn) ≤ 3.0, or ≤ 2.9, or ≤ 2.8, or ≤ 2.7, or ≤ 2.6, or ≤ 2.5. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a molecular weight distribution (Mw/Mn) ≥ 1.2, or ≥ 1.4, or ≥ 1.6, or ≥ 1.8, or ≥ 2.0. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a weight average molecular weight (Mw) ≥ 2000 g/mole, or ≥ 3000 g/mole, or ≥ 4000 g/mole, or ≥ 5000 g/mole, or ≥ 6000 g/mole. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a weight average molecular weight (Mw) ≤ 60000 g/mole, or ≤ 50000 g/mole, or ≤ 40000, or ≤ 30000 g/mole. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a melt index (I2), or calculated melt index (I2), ≥ 300 g/10 min, or ≥ 400 g/10 min, or ≥ 500 g/10 min. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene. In one embodiment, the functionalized ethylene-based polymer has a melt index (I2), or calculated melt index (I2), ≤ 1500 g/10 min, or ≤ 1200 g/10 min, or ≤ 1000 g/10 min. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and or propylene, 1-butene, 1-hexene and 1-octene.

In one embodiment, the functionalized ethylene-based polymer has a percent crystallinity ≤ 40 percent, or ≤ 35 percent, or less ≤ 30 percent, or ≤ 25 percent, or ≤ 20 percent, as determined by DSC. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and further propylene, 1-butene, 1-hexene and 1-octene. In one embodiment, the functionalized ethylene-based polymer has a percent crystallinity ≥ 2 percent, or ≥ 4 percent, or ≥ 6 percent, or ≥ 8 percent, or ≥ 10 percent, as determined by DSC. In one embodiment, the functionalized ethylene-based polymer is an anhydride and/or carboxylic acid functionalized ethylene-based polymer. In a further embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and further propylene, 1-butene, 1-hexene and 1-octene.

In one embodiment, the functionalized ethylene-based polymer has a crystallization temperature from 35°C to 65°C, or from 40°C to 60°C, or from 45°C to 55°C. In one embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and further propylene, 1-butene, 1-hexene and 1-octene.

In one embodiment, the functionalized ethylene-based polymer has a density ≥ 0.850 g/cc, or ≥ 0.855 g/cc, or ≥ 0.860 g/cc, or ≥ 0.865 g/cc. In a further embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and further propylene, 1-butene, 1-hexene and 1-octene. In one embodiment, the functionalized ethylene-based polymer has a density ≤ 0.900 g/cc, or ≤ 0.895 g/cc, or ≤ 0.890 g/cc, or ≤ 0.885 g/cc, or ≤ 0.880 g/cc. In a further embodiment, the functionalized ethylene-based polymer is an anhydride and/or carboxylic acid functionalized ethylene-based polymer. In one embodiment, the anhydride and/or carboxylic acid functionalized ethylene-based polymer is an anhydride and/or carboxylic acid functionalized ethylene/α-olefin interpolymer, or a copolymer. Preferred alpha-olefins include C3-C8 alpha-olefins, and further propylene, 1-butene, 1-hexene and 1-octene.

A functionalized ethylene-based polymer may comprise a combination of two or more embodiments as described herein. A functionalized ethylene/α-olefin interpolymer may comprise a combination of two or more embodiments as described herein. A functionalized ethylene/a-olefin copolymer may comprise a combination of two or more embodiments as described herein.

**Ethylene-based Polymers for Functionalization**

Suitable ethylene-based polymers include, for example, high density polyethylene (HDPE), linear low density polyethylene (LLDPE), ultra low density polyethylene (ULDPE), homogeneously branched linear ethylene polymers, and homogeneously branched substantially linear ethylene polymers (that is homogeneously branched long chain branched ethylene-based polymers).

In a preferred embodiment, the ethylene-based polymer is an ethylene/a-olefin interpolymer, or an ethylene/a-olefin copolymer. Suitable α-olefins include, but are not limited to, C3-C20 α-olefins, and further C3-C10 α-olefins. More preferred α-olefins include propylene, 1-butene, 1-pentene, 1-hexene, 1-heptene and 1-octene, and more further include propylene, 1-butene, 1-hexene and 1-octene, and further 1-butene and 1-octene.

In one embodiment, the ethylene-based polymer has a melt viscosity ≤ 50,000 cP, or ≤ 40,000 cP, and or ≤

30,000 cP, or ≤ 20,000 cP at 350°F (177°C). In one embodiment, the ethylene-based polymer is an ethylene/α-olefin interpolymer, or an ethylene/α-olefin copolymer. Suitable α-olefins are described above. In one embodiment, ethylene-based polymer has a melt viscosity ≥ 2,000 cP, or ≥ 3,000 cP, or ≥ 4,000 cP, or ≥ 5,000 cP, or ≥ 6,000 cP at 350°F (177°C). In one embodiment, the ethylene-based polymer is an ethylene/α-olefin interpolymer, or an ethylene/α-olefin copolymer. Suitable α-olefins are described above.

In one embodiment, the ethylene-based polymer has a molecular weight distribution or Mw/Mn from 1.1 to 3.5, and or from 1.2 to 3.0, or from 1.3 to 2.8. In a one embodiment, the ethylene-based polymer is an ethylene/α-olefin interpolymer or an ethylene/α-olefin copolymer. Suitable α-olefins are described above.

In one embodiment, the ethylene-based polymer has a melt index (12 or MI), or calculated melt index (12), ≥ 300 g/10 min, or ≥ 500 g/10 min, or ≥ 800 g/10 min, or ≥ 1000 g/10 min. In one embodiment, the ethylene-based polymer is an ethylene/α-olefin interpolymer, or an ethylene/α-olefin copolymer. Suitable α-olefins are described above. In one embodiment, the ethylene-based polymer has a melt index (12 or MI), or calculated melt index (12), ≤ 2000 g/10 min, or ≤ 1800 g/10 min, or ≤ 1600 g/10 min, or ≤ 1400 g/10 min, or ≤ 1200 g/10 min. In one embodiment, the ethylene-based polymer is an ethylene/α-olefin interpolymer, or an ethylene/α-olefin copolymer. Suitable α-olefins are described above.

In one embodiment, the ethylene-based polymer has a percent crystallinity from 5 to 35 percent, or from 7 to 30 percent, and more or from 10 to 25 percent, as determined by DSC. In one embodiment, the ethylene-based polymer is an ethylene/α-olefin interpolymer, and or an ethylene/α-olefin copolymer. Suitable α-olefins are described above.

In one embodiment, the ethylene-based polymer has a crystallization temperature from 35°C to 65°C, or from 40°C to 60°C, or from 45°C to 55°C. In one embodiment, the ethylene-based polymer is an ethylene/α-olefin interpolymer, and or an ethylene/α-olefin copolymer. Suitable α-olefins are described above.

In one embodiment, the ethylene-based polymer has a density ≤ 0.900 g/cc, or ≤ 0.895 g/cc, or ≤ 0.890 g/cc, or ≤ 0.885 g/cc. In one embodiment, the ethylene-based polymer is an ethylene/α-olefin interpolymer, and or an ethylene/α-olefin copolymer. Suitable α-olefins are described above. In one embodiment, the ethylene-based polymer has a density ≥ 0.855 g/cc, or ≥ 0.860 g/cc, or ≥ 0.865 g/cc, or ≥ 0.870 g/cc. In one embodiment, the ethylene-based polymer is an ethylene/α-olefin interpolymer, and or an ethylene/α-olefin copolymer. Suitable α-olefins are described above.

Some examples of ethylene/α-olefin copolymers include suitable AFFINITY GA Polyolefin Elastomers, available from The Dow Chemical Company, and suitable LICOCENE Performance Polymers from Clariant. Other examples of ethylene/α-olefin polymers suitable for the invention include the ultra-low molecular weight ethylene polymers described in U.S. Patent Nos. 6,335,410, 6,054,544 and 6,723,810.

In one embodiment, the ethylene-based polymer is a homogeneously branched linear ethylene/α-olefin interpolymer, and further a copolymer, or a homogeneous branched substantially linear ethylene/α-olefin interpolymer, and further a copolymer. Suitable α-olefins are described above. In one embodiment, the ethylene-based polymer is a homogeneously branched linear ethylene/α-olefin interpolymer, and further a copolymer. Suitable α-olefins are described above. In one embodiment, the ethylene-based polymer is a homogeneous branched substantially linear ethylene/α-olefin interpolymer, and further a copolymer. Suitable α-olefins are described above.

The terms "homogeneous" and "homogeneously-branched" are used in reference to an ethylene/α-olefin interpolymer, in which the α-olefin comonomer is randomly distributed within a given polymer molecule, and all of the polymer molecules have the same or substantially the same comonomer-to-ethylene ratio.

The homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. These ethylene/α-olefin interpolymers have a linear polymer backbone, no measurable long chain branching, and a narrow molecular weight distribution. This class of polymers is disclosed, for example, by Elston in US Patent No. 3,645,992, and subsequent processes to produce such polymers, using bis-metallocene catalysts, have been developed, as shown, for example, in EP 0 129 368; EP 0 260 999; US Patent No. 4,701,432; US Patent No. 4,937,301; US Patent No. 4,935,397; US Patent No. 5,055,438; and WO 90/07526. As discussed, the homogeneously branched linear ethylene interpolymers lack long chain branching, just as is the case for the linear low density polyethylene polymers or linear high density polyethylene polymers. Commercial examples of homogeneously branched linear ethylene/α-olefin copolymers include TAFMER polymers from the Mitsui Chemical Company, and EXACT and EXCEED polymers from ExxonMobil Chemical Company.

The homogeneously branched substantially linear ethylene/α-olefin interpolymers are described in U.S. Patent Nos. 5,272,236; 5,278,272; 6,054,544; 6,335,410 and 6,723,810. The substantially linear ethylene/α-olefin interpolymers and copolymers have long chain branching. The long chain branches have the same comonomer distribution as the polymer backbone, and can have about the same length as the length of the polymer backbone. "Substantially linear," typically, is in reference to a polymer that is substituted, on average, with "0.01 long chain branches per 1000 total carbons" to "3 long chain branches per 1000 total carbons." The length of a long chain branch is longer than the carbon length of a short chain branch, formed from the incorporation of one comonomer into the polymer backbone. Some polymers may be substituted with 0.01 long chain branches per 1000 total carbons to 3 long chain branch per 1000 total

carbons, further from 0.01 long chain branches per 1000 total carbons to 2 long chain branch per 1000 total carbons, and further from 0.01 long chain branches per 1000 total carbons to 1 long chain branch per 1000 total carbons.

The substantially linear ethylene/α-olefin interpolymers and copolymers form a unique class of homogeneously branched ethylene polymers. They differ substantially from the well-known class of conventional, homogeneously branched linear ethylene/α-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE), made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene/α-olefin interpolymers and copolymers useful in the invention have excellent processability, even though they have a relatively narrow molecular weight distribution. Surprisingly, the melt flow ratio (I10/I2), according to ASTM D 1238, of the substantially linear ethylene interpolymers can be varied widely, and essentially independently of the molecular weight distribution (Mw/Mn or MWD). This surprising behavior is contrary to conventional homogeneously branched linear ethylene interpolymers, such as those described, for example, by Elston in U.S. 3,645,992, and heterogeneously branched, conventional "Ziegler-Natta polymerized," linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the I10/I2 value also increases. Long chain branching can be determined by using 13C Nuclear Magnetic Resonance (NMR) spectroscopy, and can be quantified using the method of Randall (Rev. Macromol. Chem. Phys., C29 (2 &3), 1989, p. 285-297), the disclosure of which is incorporated herein by reference. Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. See, for example, Zimm, B.H. and Stockmayer, W.H., J. Chem. Phys., 17, 1301 (1949), and Rudin, A., Modern Methods of Polymer Characterization, John Wiley & Sons, New York (1991) pp. 103-112.

In contrast to "substantially linear ethylene interpolymer or copolymer," "linear ethylene interpolymer or copolymer" means that the polymer lacks measurable or demonstrable long chain branches, that is, the polymer is substituted with an average of less than 0.01 long chain branch per 1000 carbons.

An ethylene-based polymer may comprise a combination of two or more embodiments as described herein. An ethylene/α-olefin interpolymer may comprise a combination of two or more embodiments as described herein. An ethylene/α-olefin copolymer may comprise a combination of two or more embodiments as described herein.

## Additives and Applications

Also is provided a composition comprising a functionalized ethylene-based polymer as described herein. The composition may comprise one or more additives. Additives include, but are not limited to, stabilizers, pigments, nucleating agents, fillers, slip agents, fire retardants, and plasticizers. Typically polymers and polymer compositions used in the invention are treated with one or more stabilizers, for example, antioxidants, such as IRGANOX 1010 and IRGAFOS 168, both now supplied by BASF. Polymers are typically treated with one or more stabilizers before an extrusion or other melt processes.

In one embodiment, the composition further comprises an olefin-based polymer. In a further embodiment, the olefin-based polymer is selected from polyethylene homopolymer, an ethylene-based interpolymer, a polypropylene homopolymer, a propylene-based interpolymer, or hydrogenated homopolymers or copolymers of butadiene or other materials with two vinyl groups per monomer. In another embodiment, the composition further comprising a polar polymer. In a further embodiment, the polar polymer is selected from polyesters, polyamides, polyethers, polyetherimides, polyvinylalcohols, polylactic acids, polyurethanes, polycarbonatates, polyamide esters, or polyvinylchlorides. In a further embodiment, the functionalized ethylene-based polymer is dispersed in the polar polymer to form particles thereof.

In one embodiment, the functionalized ethylene-based polymer is further reacted with a primary-secondary diamine and/or an alkanolamine. Primary-secondary diamines include, but are not limited to, N-ethylethylenediamine, N-phenylethylenediamine, N-phenyl-1,2-phenylene-diamine, N-phenyl-1,4-phenylenediamine, and N-(2-hydroxyethyl)-ethylenediamine. Alkanolamines include, but are not limited to, 2-aminoethanol , 2-amino-1-propanol, 3-amino-1-propanol, 2-amino-1-butanol, 2-(2-aminoethoxy)-ethanol and 2-aminobenzyl alcohol.

Also is provided an article comprising at least one component formed from a composition comprising a functionalized ethylene-based polymer as described herein. In one embodiment, the article is selected from a film, a fiber, a foam, a molded part, a coating, an adhesive, or a dispersion. In one embodiment, the article is selected from an automotive part, an adhesive, a computer part, a roofing material, a construction material, a carpet component, or a

footwear component.

The functionalized ethylene-based polymer compositions can be used in various applications, including, but not limited to, adhesives to polymer substrates and foams, for example adhesives to polyurethane films and foams, and adhesives to polyesters; dyes, paint adhesives and paint adhesion enablers; weldability applications; automotive interiors and exteriors; lubricants and engine oil components; fibers; fabrics; paper or corrugated paper packaging, compatibilizers for polymer compositions; toughening agents for polymer compositions; conveyor belts; films; adhesives; footwear components; artificial leather; injection molded objects, such as injection molded toys; roofing and construction materials; dispersions; carpet components, such as carpet backings; and artificial turf. Further applications include adhesives, tie-layers for multi-layer films, and blends with other polar polymer for impact modification.

DEFINITIONS

Unless stated to the contrary, all test methods are current as of the filing date of this disclosure.

The terms "thermally treating," "thermal treatment," and similar terms, as used herein, refers to the application of heat to a material or composition. Heat may be applied using, for example, heat conduction through different forms of electrical heating devices, through oil or water jacketed barrels, or through viscous dissipation in a mechanical mixer.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities, for example, catalyst residues, may be incorporated into and/or within the polymer. The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, 50 wt%, or a majority amount, of ethylene monomer (based on the weight of the polymer), and optionally may comprise one or more comonomers. The term, "ethylene/$\alpha$-olefin interpolymer," as used herein, refers to an interpolymer that comprises, in polymerized form, 50 wt%, or a majority amount, of ethylene monomer (based on the weight of the interpolymer), and at least one $\alpha$-olefin. The term, "ethylene/$\alpha$-olefin copolymer," as used herein, refers to a copolymer that comprises, in polymerized form, 50 wt%, or a majority amount, of ethylene monomer (based on the weight of the copolymer), and an $\alpha$-olefin, as the only two monomer types.

The term "primary radical," as used herein, refers to a radical formed from the initial decomposition of a peroxide, and before any secondary reactions, such as beta scission, decarboxylation, etc., occur.

The term "crystallization temperature ($T_c$)," as used herein, refers to the temperature at which molten polymer is sufficiently cooled and crystal formation is thermodynamically favored. One convenient way to measure the crystallization temperature is to melt the polymer in a Differential Scanning Calorimeter, and cool it in a controlled manner, and record changes in specific heat. The crystallization temperature represents the upper limit of the temperature at which a strand can be cut using a strand cutter.

The term "cooling medium", as used herein, refers to a liquid medium though which the extrudate passes, and is cooled to a lower temperature than the temperature of the extrudate before entering the medium. The cooling medium may contain other additives, for example, one or more surfactants and one or more foam control agents. The term "water-based medium," as used herein, refers to a liquid medium which contains a majority amount of water, based on the weight of the liquid. The water-based medium may contain other additives, for example, one or more surfactants and one or more foam control agents.

The term "wet cut water slide strand pelletizer," or "water slide strand pelletizer," as used herein, refer to a device comprising a table (table chamber) containing flowing water, which is used to cool a polymer extrudate that exits the die of an extruder, and drops into the flowing water. The table supports the extrudate, and the water carries the extrudate towards a pelletizer. Additional spraying of water creates turbulence to help cool the extrudate, below its crystallization temperature, before the extrudate reaches the cutter mechanism of the pelletizer. The cutter then cuts the extrudate into pellets, and the water-pellet slurry is then typically fed to a centrifugal drier, which separates the pellets from the water. The pellets are then collected.

The term "dry cut water slide strand pelletizer," as used herein, refers to a device comprising a table (table chamber) containing flowing water, which is used to cool a polymer extrudate that exits the die of an extruder, and drops

into the flowing water. The table supports the extrudate, and the water carries the extrudate towards a pelletizer. Additional spraying of water creates turbulence to help cool the extrudate, below its crystallization temperature. The water and the extrudate are separated, before the extrudate reaches the cutter mechanism of the pelletizer. The cutter then cuts the extrudate into pellets, which are then collected.

The term "total reaction time," as used herein, in reference to a reactive extrusion process, refers to the time the polymer melt is above the temperature, where at least 90 wt% (based on the weight of the peroxide(s)) of a peroxide system decomposes, and a functionalization reaction can occur.

The term peroxide system," as used herein, refers to one peroxide or a mixture of two or more peroxides.

The term "pelletization temperature ($T_{pel}$)," as used herein, refers to temperature at which the functionalized ethylene based polymer is cut into pellets. The "$T_{pel}$" may be above or below the crystallization temperature of the functionalized ethylene based polymer, depending on the pelletizing method used.

The term "medium temperature ($T_{med}$)," as used herein, refers to the temperature of the medium where the extrudate enters the medium.

The term "normalized feed rate," as used herein, refers to the feed rate to the extruder (lbs/hr) divided by the cube of the extruder diameter (mm). The normalized rate is expressed in (lbs/hr)/$(mm)^3$.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step, or procedure, excepting those that are not essential to operability. The term "consisting of' excludes any component, step or procedure not specifically delineated or listed.

TEST METHODS:

***Peroxide Half Life***

Half-life values are obtained by measuring decomposition of dilute peroxide solutions in solvents. The half-life can be calculated from the Arrhenius equation as follows: $k_d = A \cdot e^{-Ea/RT}$, where A is the Arrhenius frequency factor, $E_a$ is the activation energy, T is the test temperature, and R is the ideal gas constant. The half-life ($t_{1/2}$) is calculated from the following equation: $t_{1/2} = \ln 2/k_d$. The value for "A" and the value for "Ea" can each be determined from literature (for example, literature from Arkema). The data for this work was obtained from the Arkema literature "Arkema Peroxide Half-Life Calculator," 2005 Arkema, Inc., available through "www.arkemainc.com/pdf/HalfLife.xls," which used 0.2M peroxide in dodecane (solvent).

***Melt Viscosity***

Melt viscosity is measured in accordance with ASTM D 3236 (177°C, 350°F), using a Brookfield Digital Viscometer (Model DV-III, version 3), and disposable aluminum sample chambers. The spindle used, in general, is a SC-31 hot-melt spindle, suitable for measuring viscosities in the range from 10 to 100,000 centipoise. The sample is poured into the chamber, which is, in turn, inserted into a Brookfield Thermosel, and locked into place. The sample chamber has a notch on the bottom that fits the bottom of the Brookfield Thermosel, to ensure that the chamber is not allowed to turn, when the spindle is inserted and spinning. The sample (approximately 8-10 grams of polymer or resin) is heated to the required temperature, until the melted sample is about one inch below the top of the sample chamber. The viscometer apparatus is lowered, and the spindle submerged into the sample chamber. Lowering is continued, until the brackets on the viscometer align on the Thermosel. The viscometer is turned on, and set to operate at a shear rate, which leads to a torque reading in the range of 40 to 60 percent of the total torque capacity, based on the rpm output of the viscometer. Readings are taken every minute, for about 15 minutes, or until the values stabilize, at which point, a final reading is recorded.

***Melt Index***

Melt index (12, or MI) of an ethylene-based polymer is measured in accordance with ASTM D-1238, condition 190°C/2.16 kg. For high 12 polymers (I2 greater than, or equal to, 200 g/mole, melt index is preferably calculated from Brookfield viscosity as described in U.S. Patents Nos. 6,335,410; 6,054,544; 6,723,810. I2(190°C/2.16kg) = $3.6126[10^{(\log(\ )-6.6928)/-1.1363}] - 9.3185$, where = melt viscosity, in cP, at 350°F.

***Gel Permeation Chromatography***

The average molecular weights and molecular weight distributions for ethylene-base polymers are determined with a chromatographic system, consisting of either a Polymer Laboratories Model PL-210 or a Polymer Laboratories Model PL-220. The column and carousel compartments are operated at 140°C for ethylene-based polymers. The columns are three Polymer Laboratories 10-micron, Mixed-B columns. The solvent is 1,2,4-trichlorobenzene. The samples are prepared at a concentration of "0.1 gram of polymer in 50 milliliters" of solvent. The solvent used to prepare the samples contains "200 ppm of butylated hydroxytoluene (BHT)." Samples are prepared by agitating lightly for two hours at 160°C. The injection volume is "100 microliters," and the flow rate is 1.0 milliliters/minute. Calibration of the GPC column set is performed with narrow molecular weight distribution polystyrene standards, purchased from Polymer Laboratories (UK).

The polystyrene standard peak molecular weights are converted to polyethylene molecular weights, using the following equation (as described in Williams and Ward, J. Polym. Sci., Polym. Let. 6, 621 (1968)): $M_{polyethylene} = A \times (M_{polystyrene})^B$, where M is the molecular weight, A has a value of 0.4315 and B is equal to 1.0. Polyethylene equivalent molecular weight calculations are performed using VISCOTEK TriSEC software Version 3.0. The molecular weights for polypropylene-based polymers (majority amount of polymerized propylene) can be determined using Mark-Houwink ratios according to ASTM D6474.9714-1, where, for polystyrene a = 0.702 and log K = -3.9, and for polypropylene, a = 0.725 and log K = -3.721. For propylene-based polymers, the column and carousel compartments are operated at 160°C.

***Differential Scanning Calorimetry***

Differential Scanning Calorimetry (DSC) is used to measure crystallinity, melting temperature and crystallization temperature, in both the base and the functionalized ethylene based polymer (PE) based samples. About five to eight milligrams of sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE. The sample is kept at this temperature for three minutes. Then the sample is cooled at a rate of 10°C/min to -60°C for PE, and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE, and multiplying this quantity by 100 (e.g., for PE, % cryst. = ($H_f$ / 292 J/g) x 100). Unless otherwise stated, melting point(s) ($T_m$) of each polymer is determined from the second heat curve (peak temp.) obtained from DSC, as described above. The crystallization temperature ($T_c$) is similarly measured from the first cooling curve (peak temp).

***Density***

Samples for density measurement are prepared according to ASTM D 1928. Polymer samples are pressed at 190°C and 30,000 psi (207 MPa) for three minutes, and then at 21°C and 30,000 psi (207 MPa) for one minute. Measurements are made within one hour of sample pressing using ASTM D792, Method B.

***Fourier Transform Infrared Spectroscopy (FTIR) Analysis - Maleic Anhydride Content***

The concentration of maleic anhydride is determined by the ratio of peak heights of the maleic anhydride at wave number 1791 cm$^{-1}$ to the polymer reference peak, which, in case of polyethylene, is at wave number 2019 cm$^{-1}$. Maleic anhydride content is calculated by multiplying this ratio with the appropriate calibration constant. The equation used for maleic grafted olefin-based polymers (with reference peak for polyethylene) has the following form, as shown in Equation 1.

$$\text{MAH (wt\%)} = A * \{[\text{FTIR PeakArea@ 1791 cm-1}]/[\text{ FTIR PeakArea 2019 cm-1}] + B* [\text{FTIR PeakArea@ 1712 cm-1}]/[\text{ FTIR_PeakArea@ 2019 cm-1}]\} \quad \text{(Eqn. 1)}$$

The calibration constant A can be determined using C13 NMR standards. The actual calibration constant may differ slightly, depending on the instrument and polymer. The second component at wave number 1712 cm$^{-1}$ accounts for the presence of maleic acid, which is negligible for freshly grafted material. Over time, however, maleic anhydride is readily converted to maleic acid in the presence of moisture. Depending on surface area, significant hydrolysis can occur in just a few days, under ambient conditions. The acid has a distinct peak at wave number 1712 cm$^{-1}$. The constant B in Equation 1 is a correction for the difference in extinction coefficients between the anhydride and acid groups.

The sample preparation procedure begins by making a pressing, typically 0.05 to 0.15 millimeters in thickness, in a heated press, between two protective films, at 150-180°C for one hour. MYLAR and TEFLON are suitable protective

films to protect the sample from the platens. Aluminum foil must never be used (maleic anhydride reacts with aluminum). Platens should be under pressure (~10 ton) for about five minutes. The sample is allowed to cool to room temperature, placed in an appropriate sample holder, and then scanned in the FTIR. A background scan should be run before each sample scan, or as needed. The precision of the test is good, with an inherent variability of less than ± 5%. Samples should be stored with desiccant to prevent excessive hydrolysis. Moisture content in the product has been measured as high as 0.1 weight percent. The conversion of anhydride to acid, however, is reversible with temperature, but may take up to one week for complete conversion. The reversion is best performed in a vacuum oven at 150°C; a good vacuum (>27 inches Hg) is required. If the vacuum is less than adequate, the sample tends to oxidize, resulting in an infrared peak at approximately 1740 $cm^{-1}$, which will cause the values for the graft level to be too low. Maleic anhydride and acid are represented by peaks at about 1791 and 1712 $cm^{-1}$, respectively.

***Residual Peroxide & Efficiency of Peroxide Consumption***

Residual peroxide, in the functionalized ethylene-based polymer, is analyzed using Capillary Gas Chromatography. This method uses gas chromatography (GC) with flame ionization detection (FID). The analysis is performed on an AGILENT 6890 Plus GC with an AGILENT 7683 Series Injector. AGILENT EZChrom software is used to collect and analyze data. Residual peroxide was extracted using methylene chloride. Once the Residual Peroxide is measured the Efficiency of Peroxide Consumption is calculated using: Efficiency of peroxide consumption = 100 x [(Peroxide Fed - Peroxide residual) / (Peroxide Fed)].

The decomposition of peroxide is a function of the melt temperature, and is expressed in terms of its half-life (time required for half the remaining peroxide to decompose). For example, the half-life versus temperature dependence for LUPEROX 101 is described below:

| (Deg C) | 160 | 170 | 180 | 190 | 200 | 210 | 220 |
|---|---|---|---|---|---|---|---|
| Half Life, min | 7.65 | 2.89 | 1.14 | 0.47 | 0.20 | 0.09 | 0.04 |

At about 4-5 half-lives, >90% of the fed peroxide is decomposed.

| # of Half Lives | 1 50.0 | 2 | 3 | 4 93.8 | 5 96.9 | 6 98.4 |
|---|---|---|---|---|---|---|
| % POX decomposed | | 75.0 | 87.5 | | | |

***Ability to Pelletize*** - The ability to pelletize was defined as the capability to sustain production at consistent throughput rates for > 4 hours, without experiencing a polymer wrap-around at the pellet cutting device (for example, an underwater pelletization or a wet cut water slide strand pelletization).

***Yellowness Index*** - Yellowness Index (YI) value is measured using ASTM D6290. The polymers, compositions and processes of this invention, and their use, are more fully described by the following examples. The following examples are provided for the purpose of illustrating the invention, and are not to be construed as limiting the scope of the invention.

EXPERIMENTAL

The materials used in this study, and their properties, are shown in Tables 1A and 1B.

Table 1A: Reagents

| Material | Chemical Name | CAS No. | Supplier |
|---|---|---|---|
| AFFINITY GA 1875* | Ethylene octene copolymer | 26221-73-8 | Dow Chemical |
| Maleic anhydride | Maleic anhydride | 108-31-6 | |
| LUPEROX 101** | 2,5 dimethyl 2,5-di(t-butyl-peroxy) hexane | 78-63-7 | Arkema |
| *Density from 0.868 to 0.873 g/cc, melt viscosity from 5700 to 7700 cP (177°C (350°F)), $T_c$ = 52°C.<br>** LUPEROX 101 (Arkema), TRIGONOX 101 (Akzo Nobel) and DBPH (United Initiators) are considered equivalent. | | | |

Table 1B: Additional Properties of the Peroxide

| | LUPEROX 101 |
|---|---|
| Active Oxygen (%) | 11.02 |
| SADT (°C) of pure peroxide | 86 |
| Mol Wt (g/mol) | 290 |
| Primary radical(s) | t-butoxy, alkoxy |
| Primary radical Type | RO• |
| Dissociation Energies of primary radicals (kcal/mole)* | ≥ 100 |
| *Blanksby S.J. and Ellison G.B., Acc. Chem. Res. 2003, 36, 255-263. | |

Table 1C below shows the half-lives of LUPEROX 101 at different temperatures. As a rule of thumb, about 5-6 half lives are required for greater than 95% decomposition of the peroxide into radicals, to initiate grafting. In a typical reactive extrusion process, it is desirable to have the residence time of the order of less than one minute, to avoid unreasonably low production rates. Therefore, it is desirable to have a half-life of about 10 seconds, at the melt temperature at which grafting is carried out. To achieve this, the melt temp. should preferably be above 200°C.

Table 1C: Half Life versus Temperature for LUPEROX 101[a]

| (°C) | Minutes (sec) |
|---|---|
| 160 | 7.65 |
| 170 | 2.89 |
| 180 | 1.14 |
| 190 | 0.47 |
| 200 | 0.20 (12) |
| 210 | 0.09 |
| 220 | 0.04 |
| a) $E_a$ = 155.6 kJ/mol, and A = 8.73E+15 $sec^{-1}$. | |

*First Compositions*

The first compositions contained the base polymer (AFFINITY GA 1875), the maleic anhydride (MAH), and the peroxide (LUPEROX 101 (POX)) that was diluted with mineral oil (1:1 wt to wt) to enhance ease of handling and feeding. A white mineral oil ("350 SUS" available from Penreco) was used to dilute the POX. The detailed formulation is shown in Table 1D.

Table 1D: Formulation Used

| Material | wt% |
|---|---|
| AFFINITY GA 1875 | 98.05 |
| Peroxide/Oil (1/1 Blend)* | 0.35 |
| MAH | 1.6 |
| TOTAL | 100 |
| *1750 ppm peroxide, based on total weight of formulation | |

*Actual Grafting Reaction*

The grafting reaction was performed in two, "92 mm co-rotating" twin screw extruders, arranged in tandem.

Each extruder was configured with 11 Barrels (40 L/D) providing a total L/D ratio of 88. For each extruder, the potential maximum screw speed was 625 rpm, and the motor output was 700 HP. The extrusion set-up was equipped with "loss-in-weight feeders" for pellet feed, and the POX and molten MAH were metered into the extruder at Barrel 4B and Barrel 3B of the first extruder, respectively. The run rate was between 1200 - 2000 lbs/hr. Nitrogen gas was injected, at approximately 5 SCFH, in Barrel 1 of Extruder 1, to maintain an inert atmosphere and minimize oxidation. A vacuum (approx. 20" Hg) was pulled on Barrel 10 of Extruder 2. The operating conditions for Extruder 1 and Extruder 2 were as shown below (temperatures are ± 15°F):

Extruder 1: Screw speed = 475-600 rpm, Feed barrel - Full Cooling, Barrel # 2: 140°F (60°C), Barrel # 3: 248°F (120°C), Barrel # 4: 455°F (235°C), Barrel # 5 - 11: 550°F (288°C). Extruder 2: Screw speed = 275 rpm, Barrel 1-3: 302°F (150°C), Barrel # 4 - 11: Target 100°F (38°C) after startup (full cooling), Transfer lines and Gear pump: 200°F (93°C), Die: 240°F (116°C).

The compounding set-up downstream of the second extruder included a gear pump, screen changer, underwater pelletizer, or a water slide strand pelletizer, followed by a pellet size classifier.

*Pelletization:*

In certain examples, a Gala Model 7 underwater pelletizer, in conjunction with a screen changer and divert valve, was used to pelletize the extruded product. The underwater pelletizer set-up consisted of a 36 hole die with 0.093" hole diameter. The average pellet water temperature was about 15°C, and the maximum water slurry flow rate was used. An antifoam was used to aid pelletization and prevent pellet sticking. In certain examples, a wet cut water slide strand pelletizer was used, which consisted of a 40 hole die with nominal 0.125" die hole diameter opening. The water slide had eight spray zones (four spray nozzles per zone), and the resulting pellet/water slurry was separated using a spin dryer. The water temperature was maintained from 50°F-65°F (average temperature = 57.5°F), and it was pumped at approximately 60 gpm to water slide. The cutter speed was about 1200 ± 150 rpm. Results are shown in Table 2.

***Simulation***

*Calculation of Melt Temperature, Average Residence Time, Total Reaction Time and Estimated Efficiency of Peroxide Consumption*

The *average residence time* and melt temperature are calculated using simulations, which use a commercial software AKRO-CO-TWIN SCREW, Version 3. The calculation of the melt temperature and average residence time, using the AKRO-CO-TWIN SCREW, Version 3 software, is discussed in a paper by S. Bawiskar and J.L. White, "A Composite Model for Solid Conveying, Melting, Pressure and Fill Factor Profiles in Modular Co-rotating Twin Screw Extruders," International Polymer Processing, Vol XII (4), 1997, pages 331-340. The average residence time of the process = total filled volume of the extrusion / total volumetric flow rate of polymer. The calculation of the volume of the extruder can be determined using the process described in the article by Booy M.L., "Geometry of Fully Wiped Twin Screw Equipment," Polymer Engineering and Science, Volume 18, Issue 12, pages 973-984, September 1978. The filled volume is calculated based on the flow characteristics of the individual screw elements in the screw design. The volumetric flow rate is based on the feed rate and the melt density.

The *average residence time* depends upon the run rate, the volume of the extruder (L/D ratio, cross-sectional area) and the filled volume, which depends upon the screw design and operating conditions (run rate, screw speed). The total average residence time is of the order of 1.5 - 2.0 minutes (90 - 120 seconds) for a 88 L/D, 92mm co-rotating twin screw extruder for normal operating conditions (see Table 2). However, just providing sufficient residence time is not enough for reaction to occur. Here, the *total reaction time* is the time the polymer melt is above a temperature, where least 90 wt% (based on the weight of the peroxide(s)) of a peroxide system decomposes, and a functionalization reaction can occur. For LUPEROX 101, this temperature is 200°C. The *total reaction time* is less than the *average residence time,* as the initial portion of the first extruder is used to melt and heat the polymer. Further, as the melt is cooled, prior to pelletization, the melt temperature drops below 200°C, and the reaction is again slowed down, as appreciable peroxide decomposition does not occur. The commercial software AKRO-CO-TWIN SCREW (Version 3) calculated the *total reaction time,* using the following inputs: feed rate, screw speed, barrel temperatures, material properties- specific heat, heat of fusion, melt density, viscosity, power law index and heat transfer coefficient.

From the simulations, an estimate of the residual peroxide (I) can be calculated using the following equation, which is based on the kinetics of peroxide decomposition (Reference: Munteanu D., Plastics Additives Handbook, Chap. 14, edited by Zweifel H., 5th Edition, Hanser, (2001)): $\frac{I}{I_0} = e^{-k_d t}$, where $I_0$ is initial feed concentration, $k_d = A \cdot e^{-Ea/RT}$,

where A is the Arrhenius frequency factor, $E_a$ is the activation energy and R is the ideal gas constant. The value for "A" and the value for "Ea" for LUPEROX 101 are stated in Table 1C and can each be obtained from literature (for example, literature from Arkema). The temperature T, in this study, is 200°C (473K) and t is the Total Reaction Time. The efficiency of peroxide consumption (Efficiency) is then Efficiency, $\% = \left[1 - \frac{I}{I_0}\right] 100$ .

Table 2 shows the inventive and comparative data collected from the 92 mm, 88 L/D, tandem, co-rotating twin screw extruder. Table 3 shows the simulation results for the same extruder using the AKRO CO-TWIN SCREW software (Version 3).

From Table 2, it is seen that the underwater pelletization process fails above 1400 lbs/hr, whereas the wet cut water slide strand pelletization can produce material, at 2000 lbs/hr or above. For a "92 mm (diameter) machine," a feed rate of "1400 lbs/hr" corresponds to a normalized feed rate of 0.0018 (lbs/hr)/$(mm)^3$, and feed rate of "2000 lbs/hr" corresponds to a normalized feed rate of 0.0026 (lbs/hr)/$(mm)^3$. With underwater pelletization (Comp-3, 4, 5 in Table 2), higher rates are not possible, because, as the feed rate is increased to 1450 lbs/hr, the melt temperatures exceed 180°C, which are unfavorable for underwater pelletization. Above 1600 lbs/hr (Comp 1, 2 in Table 2), even with water slide pelletization, there is insufficient total reaction time (Sim-4, 5 in Table 3), and this results in significant levels of residual peroxide that is unreacted. This is undesirable, and causes the viscosity to increase to 15,000 cP, or above, and the Efficiency of Peroxide Decomposition falls below 91 wt%.

However, with water slide pelletization, it is possible to increase the first extruder rpm to 590-600 (Invs 3, 4 in Table 2), and raise the melt temperatures and total reaction times (Sim-6, 7, 8, 9 in Table 3), to complete peroxide decomposition and grafting, by increasing the Efficiency of Peroxide Consumption to greater than 91 wt%. Since the calculated melt temperatures in the examples (Inv-3, 4) are well above 185°C, it would not be possible to underwater pelletize at these temperatures, and only water slide pelletization is possible.

The simulation results in Table 3 also show the *average residence time,* the *total reaction time* and the *estimated efficiency of peroxide consumption.* It is seen as *the feed rate* is increased, both the *average residence time* and the *total reaction time* decrease. The *total reaction time* in Comp. Sim 4 (1800 lbs/hr, 490 rpm) and Comp. Sim 5 (2000 lbs/hr, 490 rpm) drop to 37 seconds and 27 seconds, respectively. The half-life of LUPEROX 101 at 200°C is 12 seconds, and the (Total Reaction Time /3.5) drops below this. This explains why in Comp 1 and Comp 2, in Table 2, there is incomplete peroxide decomposition and the viscosity increases to 15,000 cP, or more.

With the water slide, the *total reaction time* can be increased by increasing the screw speed, in Extruder 1, to 600 rpm. Thus, in Sim-8/Inv-3 (1800 lbs/hr, 600 rpm) and Sim-9/Inv-4 (2000 lbs/hr, 600 rpm) the *total reaction time* increased to 51 seconds and 43 seconds, respectively. In this case, the *"total reaction time* /3.5" exceed the "12 second peroxide half-life," which result is desired. The effect of increasing the screw speed in Extruder 1 rpm to 600 rpm, is to input more energy, and raise the melt temperatures by about 8-10°C, compared the melt temperature, when running at 490 rpm. Underwater Pelletization cannot work under these conditions, as melt temperature at the exit of Extruder 2 increases well above 180°C, and pelletization is not possible, as seen in example Comp-5 in Table 2.

It is surprising that wet cut water slide underwater pelletization is possible, despite a density of 0.87 g/cc for the functionalized ethylene-based polymer. The water temperature on the water slide was controlled from 45 to 60°F (from 7 to 15°C). To enable strand cutting, the strands were cooled below the crystallization temperature (Tc) of the MAH-g-ethylene-/octene copolymer, which is about 52°C.

Table 2: Actual Inventive and Comparative Examples

| | | | | Extruder 1 | | Extruder 2 | | Measured Property | | | | | |
|---|---|---|---|---|---|---|---|---|---|---|---|---|---|
| Ex. | Pelletization method | Feed Rate, lb/hr | Normalized Feed Rate[A], $(lbs/hr)/(mm)^3$ | Screw Speed rpm | Measured torque % | Screw Speed rpm | Measured torque % | Polymer Viscosity cP** | Polymer MAH wt% | Pellet Color YI | Residual peroxide, ppm | Efficiency of POX Consumption, wt% | Pelletiza t-ion Possible |
| Inv-1 | Water Slide | 1400 | 0.0018 | 487 | 22 | 273 | 7 | 12,940 | 1.23 | 14.3 | 2 | 99.9 | Yes |
| Inv-2 | Water Slide | 1600 | 0.0021 | 487 | 22 | 273 | 7 | 13,300 | 1.22 | 9.3 | 34 | 98.1 | Yes |
| Comp-1 | Water Slide | 1800 | 0.0023 | 487 | 22 | 273 | 7 | 15,000 | 1.21 | 5.9 | 222 | 87.3 | Yes |
| Comp-2 | Water Slide | 2000 | 0.0026 | 487 | 30 | 273 | 7 | 15,130 | 1.16 | 4.9 | 589 | 66.3 | Yes |
| Inv-3 | Water Slide | 1800 | 0.0023 | 600 | 24 | 275 | 7 | 12,800 | 1.31 | 8.1 | 1 | 99.9 | Yes |
| Inv-4 | Water Slide | 2000 | 0.0026 | 600 | 25 | 275 | 7 | 12,270 | 1.27 | 3.3 | 4 | 99.8 | Yes |
| Comp-3 | Underwater | 1240 | 0.0016 | 494 | 22 | 276 | 7 | 13,067 | 1.25 | 14.0 | 2 | 99.9 | Yes |
| Comp-4 | Underwater | 1400 | 0.0018 | 560 | 18 | 275 | 5 | 12,320 | 1.13 | 24.6 | -- | -- | Margina 1 |
| Comp-5 | Underwater | 1450 | 0.0019 | 560 | 18 | 275 | 5 | 12,823 | 1.1 | 23.5 | -- | -- | No |

** @ 177°C, Brookfield Spindle #31

Each MAH-g-ethylene/octene copolymer has a Tc of 52°C and density of 0.87 g/cc.

Temperature of extrudate immediately before pelletization, using water slide, $T_{pel} < 52°C$. Water slide water temperature = 14°C ($T_{med}$).

Temperature of extrudate immediately before pelletization, using underwater, $T_{pel} > 52°C$. Underwater pelletizer water temperature = 15°C ($T_{med}$).

A) Normalized Feed Rate ($lbs/hr/mm^3$) = Feed Rate /(Diameter of extruder)$^3$. For a "92 mm (Diameter)" extruder, running at Feed Rate = 1600 lbs/hr, the Normalized Feed Rate = [(1600lbs/hr) /(92mm)$^3$ = 0.0021 $(lbs/hr)/(mm)^3$.

Table 3: Simulation Results*

| | unit | Comp. Sim-1 | Sim-2 | Sim-3 | Comp. Sim-4 | Comp. Sim-5 | Sim-6 | Sim-7 | Sim-8 | Sim-9 |
|---|---|---|---|---|---|---|---|---|---|---|
| Feed Rate (input - feed rate) | lbs/h | 1200 | 1400 | 1600 | 1800 | 2000 | 1400 | 1600 | 1800 | 2000 |
| Extruder (Ext) 1 Screw Speed (input) | rpm | 490 | 490 | 490 | 490 | 490 | 600 | 600 | 600 | 600 |
| Ext 2 Screw Speed (input) | rpm | 275 | 275 | 275 | 275 | 275 | 275 | 275 | 275 | 275 |
| Ext 1, Discharge Temp. (output) | °C | 223 | 217 | 213 | 209 | 205 | 228 | 222 | 218 | 214 |
| Ext 1, Avg. Residence Time (output) | s | 67 | 59 | 55 | 50 | 47 | 56 | 51 | 46 | 43 |
| Ext 1, Reaction Time (output) | s | 30 | 23 | 17 | 12 | 6 | 29 | 22 | 18 | 14 |
| Ext 2, Discharge Temp (output) | °C | 178 | 180 | 181 | 182 | 182 | 185 | 186 | 187 | 187 |
| Ext 2, Avg. Residence Time (output) | s | 84 | 77 | 69 | 64 | 60 | 75 | 70 | 64 | 60 |
| Ext 2, Reaction Time (output) | s | 40 | 34 | 29 | 25 | 21 | 43 | 38 | 33 | 29 |
| Total Avg. Residence Time = Ext 1 + Ext 2 (output) | s | 151 | 136 | 124 | 115 | 107 | 132 | 121 | 110 | 103 |
| Total Reaction Time = Ext 1 + Ext 2 (output) | s | 70 | 57 | 46 | 37 | 27 | 72 | 60 | 51 | 43 |
| Estimated Efficiency of Peroxide Consumption (calculated value) | wt% | 98.2 | 96.1 | 92.7 | 87.9 | 78.9 | 98.4 | 96.8 | 94.6 | 91.6 |
| Peroxide half-life (at 200°C) | s | 12 | 12 | 12 | 12 | 12 | 12 | 12 | 12 | 12 |
| (Total Reaction Time)/3.5 (calculated from output) | s | 20 | 16.3 | 13.1 | 10.6 | 7.7 | 20.6 | 17.1 | 14.6 | 12.3 |
| Normalized Feed Rate (lbs/hr)/($mm^3$)** | | 0.0015 | 0.0018 | 0.0021 | 0.0023 | 0.0026 | 0.0018 | 0.0021 | 0.0023 | 0.0026 |
| Peroxide has a half-life (at 200°C) ≤ (total reaction time/3.5)? | | yes | yes | yes | no | no | yes | yes | yes | yes |
| ***Comparative Experimental Observations*** | | | | | | | | | | |
| Is Underwater Pelletization Possible? | | yes | Marginal | no | no | no | no | no | no | no |

(continued)

| ***Comparative Experimental Observations*** | | | | | | | | | | |
|---|---|---|---|---|---|---|---|---|---|---|
| Is Water Slide Pelletization Possible? | | ves | ves | ves | ves | ves | ves | ves | ves | yes |

*Material Properties Inputs Used in Simulations: Specific heat 2.45 kJ/kgK; Heat of Fusion 40 J/g; Melt density 0.75 g/cc; viscosity 12000 cP; power law index =1; Assumptions: Heat Transfer Coefficient: 200 W/m2K. Barrel temperatures same as those in experimental section.
Each MAH-g-ethylene/octene copolymer has a Tc of 52°C and density of 0.87 g/cc.
Temperature of extrudate immediately before pelletization, using water slide, $T_{pel}$ < 52°C. Water slide water temperature =14°C ($T_{med}$).
Temperature of extrudate immediately before pelletization, using underwater pelletizer, $T_{pel}$ > 52°C. Underwater pelletizer water temperature = 15°C ($T_{med}$).
**Normalized Feed Rate (lbs/hr/mm$^3$) = Feed Rate /(Diameter of extruder)$^3$. For a "92 mm (Diameter)" extruder, running at Feed Rate = 1600 lbs/hr, the Normalized Feed Rate = [(1600lbs/hr) /(92mm)$^3$ = 0.0021 (lbs/hr)/(mm)$^3$.

## Claims

1. A process to form a "functionalized ethylene-based polymer" from a first composition comprising an ethylene-based polymer and at least one polar compound, and at least one peroxide, said process comprising at least the following:

   a) thermally treating the first composition, in at least one extruder comprising at least one barrel, to form the functionalized ethylene-based polymer;
   b) extruding the functionalized ethylene-based polymer, in melt form, to form an extrudate;
   c) cooling the extrudate; and
   d) pelletizing the extrudate; and

   wherein the "efficiency of the peroxide consumption, after the thermal treatment, is ≥ 91 wt% within the at least one extruder; and
   wherein the feed rate of the extruder is ≥ 635.0 kg/hr (1400 lbs/hr) and the "normalized feed rate" of the extruder is ≥ 0.00082 (kg/hr)/(mm)$^3$ (0.0018 (lbs/hr)/(mm)$^3$); and wherein, for step c), after the extrudate exits the extruder, and before the extrudate is pelletized, the extrudate is cooled in a cooling medium to a pelletization temperature, $T_{pel}$ (in °C), ≤ the crystallization temperature $T_c$ (in °C) of the functionalized ethylene-based polymer.

2. The process of claim 1, wherein the at least one peroxide that has a half-life (at 200°C) ≤ (total reaction time/3.5).

3. The process of any one of the previous claims, wherein the at least one peroxide decomposes into at least one primary radical selected from the following radicals: a) RCOO•, wherein R is an alkyl; b) RO•, wherein R is an alkyl; or c) ROC(O)O•, wherein R is an alkyl.

4. The process of any one of the previous claims, wherein the at least one polar compound is an anhydride-containing compound and/or carboxylic acid-containing compound.

5. The process of any one of the previous claims, wherein the ethylene-based polymer has a melt viscosity at 177°C (350°F) ≤ 20,000 cP.

6. The process of any one of the previous claims, wherein the ethylene-based polymer has a density ≤ 0.900 g/cc.

7. The process of any one of the previous claims, wherein the functionalized ethylene-based polymer has a melt viscosity, at 177°C (350°F), ≤ 15,000 cP.

8. The process of any one of the previous claims, wherein the functionalized ethylene-based polymer has a density ≤ 0.900 g/cc .

## Patentansprüche

1. Ein Verfahren zum Bilden eines "funktionalisierten Polymers auf Ethylenbasis" aus einer ersten Zusammensetzung, die ein Polymer auf Ethylenbasis und mindestens eine polare Verbindung beinhaltet, und mindestens einem Peroxid, wobei das Verfahren mindestens das Folgende beinhaltet:

   a) thermisches Behandeln der ersten Zusammensetzung in mindestens einem Extruder, der mindestens einen Zylinder beinhaltet, um das funktionalisierte Polymer auf Ethylenbasis zu bilden;
   b) Extrudieren des funktionalisierten Polymers auf Ethylenbasis in Form einer Schmelze, um ein Extrudat zu bilden;
   c) Abkühlen des Extrudats; und
   d) Pelletieren des Extrudats; und

   wobei der "Wirkungsgrad des Peroxidverbrauchs innerhalb des mindestens einen Extruders nach der thermischen Behandlung ≥ 91 Gew.-% beträgt; und
   wobei die Förderrate des Extruders ≥ 635,0 kg/h (1400 lb/h) beträgt und die "normalisierte Förderrate" des Extruders ≥ 0,00082 (kg/h)/(mm)$^3$ (0,0018 (lb/h)/(mm)$^3$) beträgt;
   und wobei in Schritt c) das Extrudat in einem Kühlmedium auf eine Pelletierungstemperatur, $T_{pel}$ (in °C), ≤ die Kristallisationstemperatur $T_c$ (in °C) des funktionalisierten Polymers auf Ethylenbasis abgekühlt wird, nachdem das

Extrudat aus dem Extruder austritt und bevor das Extrudat pelletiert wird.

2. Verfahren gemäß Anspruch 1, wobei das mindestens eine Peroxid, das eine Halbwertzeit (bei 200 °C) ≤ (Gesamtumsetzungszeit / 3,5) aufweist.

3. Verfahren gemäß einem der vorhergehenden Ansprüche, wobei das mindestens eine Peroxid in mindestens ein primäres Radikal zerfällt, das aus den folgenden Radikalen ausgewählt ist: a) RCOO•, wobei R ein Alkyl ist; b) RO•, wobei R ein Alkyl ist; oder c) ROC(O)O•, wobei R ein Alkyl ist.

4. Verfahren gemäß einem der vorhergehenden Ansprüche, wobei die mindestens eine polare Verbindung eine anhydridhaltige Verbindung und/oder eine karbonsäurehaltige Verbindung ist.

5. Verfahren gemäß einem der vorhergehenden Ansprüche, wobei das Polymer auf Ethylenbasis eine Schmelzviskosität bei 177 °C (350 °F) ≤ 20 000 cP aufweist.

6. Verfahren gemäß einem der vorhergehenden Ansprüche, wobei das Polymer auf Ethylenbasis eine Dichte ≤ 0,900 g/$cm^3$ aufweist.

7. Verfahren gemäß einem der vorhergehenden Ansprüche, wobei das funktionalisierte Polymer auf Ethylenbasis eine Schmelzviskosität, bei 177 °C (350 °F), ≤ 15 000 cP aufweist.

8. Verfahren gemäß einem der vorhergehenden Ansprüche, wobei das funktionalisierte Polymer auf Ethylenbasis eine Dichte ≤ 0,900 g/$cm^3$ aufweist.

## Revendications

1. Un procédé pour former un « polymère à base d'éthylène fonctionnalisé » à partir d'une première composition comprenant un polymère à base d'éthylène et au moins un composé polaire, et au moins un peroxyde, ledit procédé comprenant au moins les étapes suivantes :

   a) le traitement thermique de la première composition, dans au moins une extrudeuse comprenant au moins un cylindre, afin de former le polymère à base d'éthylène fonctionnalisé ;
   b) l'extrusion du polymère à base d'éthylène fonctionnalisé, sous forme fondue, afin de former un extrudat ;
   c) le refroidissement de l'extrudat ; et
   d) le pastillage de l'extrudat ; et

   dans lequel « l'efficacité de la consommation de peroxyde, après le traitement thermique, est ≥ 91 % en poids au sein de l'au moins une extrudeuse ; et
   dans lequel la vitesse d'alimentation de l'extrudeuse est ≥ 635,0 kg/h (1 400 lb/h) et la « vitesse d'alimentation normalisée » de l'extrudeuse est ≥ 0,00082 (kg/h)/$(mm)^3$ (0,0018 (lb/h)/$(mm)^3$) ;
   et dans lequel, pour l'étape c), après que l'extrudat sort de l'extrudeuse, et avant que l'extrudat est pastillé, l'extrudat est refroidi dans un milieu de refroidissement jusqu'à une température de pastillage, $T_{pel}$ (en °C), ≤ la température de cristallisation $T_c$ (en °C) du polymère à base d'éthylène fonctionnalisé.

2. Le procédé de la revendication 1 dans lequel l'au moins un peroxyde qui a une demi-vie (à 200 °C) ≤ (temps de réaction total/3,5).

3. Le procédé de n'importe laquelle des revendications précédentes, dans lequel l'au moins un peroxyde se décompose en au moins un radical primaire sélectionné parmi les radicaux suivants : a) RCOO•, dans lequel R est un alkyle ; b) RO•, dans lequel R est un alkyle ; ou c) ROC(O)O•, dans lequel R est un alkyle.

4. Le procédé de n'importe laquelle des revendications précédentes, dans lequel l'au moins un composé polaire est un composé contenant un anhydride et/ou un composé contenant un acide carboxylique.

5. Le procédé de n'importe laquelle des revendications précédentes, dans lequel le polymère à base d'éthylène a une viscosité à l'état fondu à 177 °C (350 °F) ≤ 20 000 cP.

6. Le procédé de n'importe laquelle des revendications précédentes, dans lequel le polymère à base d'éthylène a une masse volumique ≤ 0,900 g/$cm^3$.

7. Le procédé de n'importe laquelle des revendications précédentes, dans lequel le polymère à base d'éthylène fonctionnalisé a une viscosité à l'état fondu, à 177 °C (350 °F), ≤ 15 000 cP.

8. Le procédé de n'importe laquelle des revendications précédentes, dans lequel le polymère à base d'éthylène fonctionnalisé a une masse volumique ≤ 0,900 g/$cm^3$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62406981
- US 20100160497 A
- US 20040164443 A
- US 6706396 B
- WO 2006039774 A
- WO 2015102886 A
- WO 2001047677 A
- WO 2010059332 A
- US 1653017 W
- US 62272390
- US 7897689 B
- US 6335410 B
- US 6054544 A
- US 6723810 B
- US 3645992 A
- EP 0129368 A
- EP 0260999 A
- US 4701432 A
- US 4937301 A
- US 4935397 A
- US 5055438 A
- WO 9007526 A
- US 5272236 A
- US 5278272 A
- US 4076698 A, Anderson


### Non-patent literature cited in the description


- **P. R. DLUZNESKI.** Peroxide Vulcanization of Elastomers. *Rubber Chemistry and Technology,* vol. 74, 452
- *CHEMICAL ABSTRACTS,* 78-63-7
- *CHEMICAL ABSTRACTS,* 80-43-3
- *CHEMICAL ABSTRACTS,* 10508-09-5
- *CHEMICAL ABSTRACTS,* 614-45-9
- *CHEMICAL ABSTRACTS,* 4511-39-1
- *CHEMICAL ABSTRACTS,* 25155-25-3
- *CHEMICAL ABSTRACTS,* 34443-12-4
- **RANDALL.** *Rev. Macromol. Chem. Phys.,* 1989, vol. C29 (2 &3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- Arkema Peroxide Half-Life Calculator. Arkema, Inc, 2005
- **WILLIAMS ; WARD.** *J. Polym. Sci., Polym. Let.,* 1968, vol. 6, 621
- *CHEMICAL ABSTRACTS,* 26221-73-8, 108-31-6, 78-63-7
- **BLANKSBY S.J. ; ELLISON G.B.** *Acc. Chem. Res.,* 2003, vol. 36, 255-263
- **S. BAWISKAR ; J.L. WHITE.** A Composite Model for Solid Conveying, Melting, Pressure and Fill Factor Profiles in Modular Co-rotating Twin Screw Extruders. *International Polymer Processing,* 1997, vol. XII (4), 331-340
- **BOOY M.L.** Geometry of Fully Wiped Twin Screw Equipment. *Polymer Engineering and Science,* September 1978, vol. 18 (12), 973-984
- **MUNTEANU D.** Plastics Additives Handbook. Hanser, 2001